# EUROPÄISCHE PATENTSCHRIFT

(11) **EP 1 843 852 B1**
(45) Veröffentlichungstag und Bekanntmachung des Hinweises auf die Patenterteilung: **07.09.2011**
(21) Anmeldenummer: 05803089.1
(22) Anmeldetag: 18.11.2005
(51) Int. Cl.: B02C 19/22, B01F 13/10, G01N 1/28

(54) **VORRICHTUNG ZUM EXTRAHIEREN, FRAGMENTIEREN, MISCHEN UND HOMOGENISIEREN VON INSBESONDERE INFEKTIÖSEN, ÜBEL RIECHENDEN, CHEMISCH AGGRESSIVEN ODER STERILEN STOFFEN**
DEVICE FOR EXTRACTING, FRAGMENTING, MIXING AND HOMOGENIZING ESPECIALLY INFECTIOUS, MALODOROUS, CHEMICALLY CORROSIVE OR STERILE SUBSTANCES
DISPOSITIF POUR EXTRAIRE, FRAGMENTER, MELANGER ET HOMOGENEISER DES SUBSTANCES, EN PARTICULIER DES SUBSTANCES INFECTIEUSES, FETIDES, CHIMIQUEMENT AGRESSIVES OU STERILES

(30) Priorität: 01.02.2005 CH 1462005
(43) Veröffentlichungstag der Anmeldung: 17.10.2007
(73) Patentinhaber: Medic Tools AG, 6300 Zug (CH)
(72) Erfinder: BUCHER, Franz, Gregor, CH-6304 Zug (CH)
(74) Vertreter: Kisters, Michael Marcus
(86) Internationale Anmeldenummer: PCT/CH2005/000686
(87) Internationale Veröffentlichungsnummer: WO 2006/081694

(56) Entgegenhaltungen:
- WO-A-2004/035191
- BE-A- 493 035
- CH-A- 366 823
- DE-C- 167 144
- FR-A- 2 232 365
- FR-A- 2 589 754

## Beschreibung

Gegenstand der Erfindung ist eine Vorrichtung zum Extrahieren, Fragmentieren, Mischen und Homogenisieren von insbesondere infektiösen, übel riechenden, chemisch aggressiven oder sterilen Stoffen gemäss Oberbegriff des Patentanspruchs 1.

Vorrichtungen dieser Gattung sind bekannt. Aus der W02004/035191 ist ein Einwegmischer und Homogenisator bekannt, welcher ein rohrförmiges Labortestgefäss umfasst, in dessen Deckel ein Rührelement mit Schneid- und/oder Quetschelementen drehbar gelagert ist. Peripher zum Rührelement sind drehfest mit dem Labortestgefäss verbunden an einer Rückhaltehülse Schneidkanten ausgebildet, in welche das Rührelement eingreift. Mit diesem Einwegmischer und Homogenisator lassen sich insbesondere infektiöse, übel riechende, chemisch aggressive oder sterile Stoffe mischen und homogenisieren. Die derart bearbeiteten Stoffe bleiben hermetisch von der Umgebung abgetrennt im Homogenisier- und Mischraum und können, wenn sie die gewünschte Konsistenz erreicht haben, durch die hohl ausgebildete Welle des Rührelements entnommen werden, ohne dass das Labortestgefäss dazu geöffnet werden muss.

Der Nachteil dieser Vorrichtung besteht darin, dass bei Verarbeitung von fasrigen oder Sehnen enthaltenden Stoffen letztere die Öffnung der Pipette beim Absaugen der bearbeiteten Probe verstopfen können und so die Entnahme einer Testmenge des Stoffes wesentlich erschweren.

Eine Aufgabe der vorliegenden Erfindung ist die Schaffung einer Vorrichtung zum Extrahieren, Fragmentieren, Mischen und Homogenisieren von insbesondere infektiösen, übel riechenden, chemisch aggressiven oder sterilen Stoffen der genannten Gattung, bei der die zu bearbeitenden Stoffe, auch wenn diese nur in Kleinstmengen vorliegen, während der Bearbeitung kontinuierlich am Bearbeitungswerkzeug vorbeigeführt und bearbeitet werden.

Eine weitere Aufgabe der vorliegenden Erfindung ist die Schaffung einer Vorrichtung zum Extrahieren, Fragmentieren, Mischen und Homogenisieren von insbesondere infektiösen, übel riechenden, chemisch aggressiven oder sterilen Stoffen der genannten Gattung, welche eine einfache und störungsfreie Entnahme des in der Vorrichtung bearbeiteten Stoffes ermöglichen.

Gelöst wird diese Aufgabe durch eine Vorrichtung mit den Merkmalen des Patentanspruchs 1. Vorteilhafte Ausgestaltungen der Erfindung sind in den abhängigen Ansprüche umschrieben.

Durch ein schraubenlinienförmig verlaufendes Fördermittel werden die unverarbeiteten und in Verarbeitung befindlichen Stoffe andauernd am Bearbeitungswerkzeug vorbeigeführt, bis die gewünschte Konsistenz erreicht ist. Es gelingt weiter durch ein den Bearbeitungsraum im Labortestgefäss unterteilendes Sieb, nicht benötigte, noch im bearbeitenden Probematerial enthaltene grobe, nicht zerkleinerte oder zerkleinerbare Anteile von den optimal homogenisierten, fragmentierten, d.h. extrahierten Stoffe zu separieren. In einer besonders vorteilhaften Ausgestaltung der Erfindung kann die Entnahme dieser abgetrennten Stoffe direkt durch die hohle Welle des Bearbeitungselements und - falls vorhanden - durch ein durchstechbares Sieb hindurch ohne Öffnen des Labortestgefässes letzterem entnommen werden. Die Anordnung der durchstossbaren Fläche im Sieb an einem rohr- oder domförmigen Aufsatz erleichtert das Hindurchtreten der gewünschten Fraktion vom Bearbeitungsraum in den Sammelraum.

Anhand zweier illustrierter Ausführungsbeispiele wird die Erfindung näher erläutert. Es zeigen
- Figur 1: einen Axialschnitt durch eine Vorrichtung zum Bearbeiten von Stoffen in einem Labortestgefäss,
- Figur 2: eine Ansicht der Vorrichtung aus Richtung Pfeil P in Figur 1,
- Figur 3: einen Querschnitt durch die Vorrichtung entlang Linie II-III in Figur 1,
- Figur 4: eine vergrösserte Darstellung des Bereichs A in Figur 1,
- Figur 5: eine Ansicht auf den Deckel,
- Figur 6: eine perspektivische Explosionsdarstellung der im Labortestgefäss eingesetzten Elemente,
- Figur 7: einen Axialschnitt durch die Vorrichtung mit teilweise eingefahrener Pipette und
- Figur 8: einen Axialschnitt durch eine weitere Ausführungsform der Vorrichtung ohne Leitfunktion des Labortestgefässes.

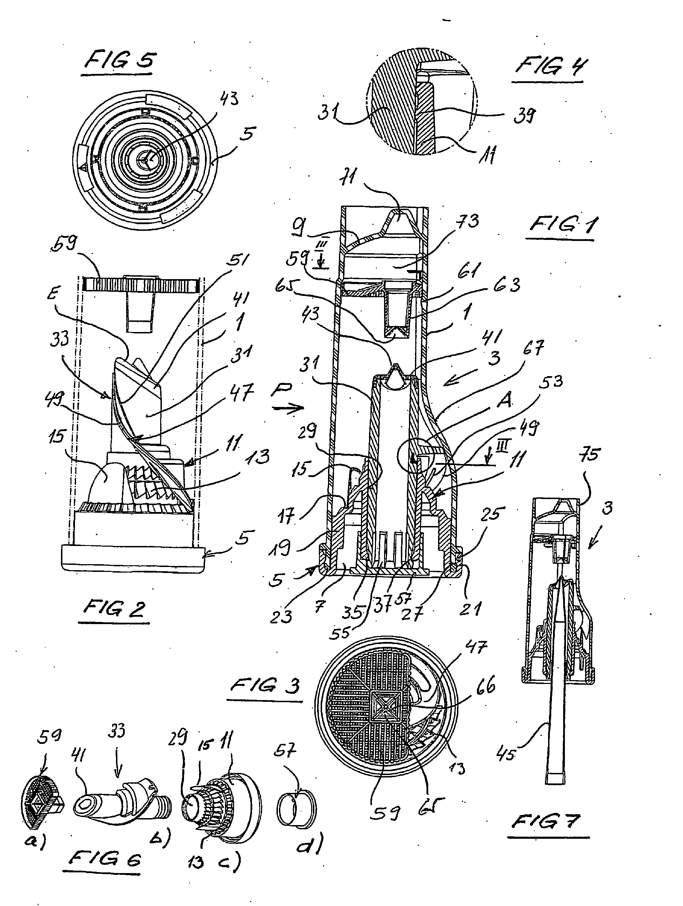

In Figur 1 ist mit Bezugszeichen 1 der Mantel eines Labortestgefässes 3 bezeichnet. Letzteres steht mit seiner Öffnung 7 nach unten auf dem Kopf, d.h. auf dem Deckel 5, welcher die Öffnung 7 des Labortestgefässes 3 verschliesst. Der Boden 9 des Labortestgefässes 3 liegt demzufolge in den Figuren oben. In dieser Stellung erfolgt die Bearbeitung von zu extrahierenden, fragmentierenden, mischenden oder homogenisierenden Stoffen. Der Ausdruck "Bearbeitung" bedeutet im Folgenden immer Extrahieren, Fragmentieren, Mischen und/oder Homogenisieren.

Am Deckel 5 ist ein Bearbeitungswerkzeug 11 drehfest befestigt. Letzteres umfasst, konisch angeordnet, beispielsweise eine Vielzahl von Zähnen 13. Die Zähne 13 können in einer oder mehreren axial versetzten Ebenen zueinander angeordnet sein. Im dargestellten Beispiel sind drei axial hintereinander liegende, die Gestalt von Kegelrädern aufweisende Zähnegruppen 13 am Bearbeitungswerkzeug 11 angeordnet. Die zuunterst liegende Zähnereihe kann in einem grösseren Abstand zur zweituntersten Reihe liegen, derart, dass stirnseitig eine koaxial angeordnete Schneidflosse 15 auf dem ringförmigen Absatz 17 aufsetzbar ist.

Der soeben beschriebene Teil des Bearbeitungswerkzeugs 11 ist am Kragen 19 des Deckels 5 befestigt, welcher ins Innere des Mantels 1 des Labortestgefässes 3 ragt. Ein Bördel 21 am Deckel 5 umschliesst den oberen Rand 23 des Labortestgefässes 3. Vorzugsweise ist der Rand 23 des Deckels 5 mit einem nach innen gerichteten Wulst 25 versehen, welcher in einen Einstich 27 ragt, der am oberen Rand des Mantels 1 ausgebildet ist. Alternativ zum eben beschriebenen schnappbaren Deckel 5 kann selbstverständlich anstelle des Wulstes 25 und Einstichs 27 ein Gewinde oder ein Bajonettverschluss treten.

Das Bearbeitungswerkzeug 11 umfasst eine zentrale Bohrung 29, welche als Gleitlager für ein Führungsrohr 31 eines Rührelementes 33 dient. Diese Lagerbohrung 29 weist am deckelseitigen Ende eine nach innen gerichtete Rippe 35 auf, welche in eine umlaufende Nut 37 am Führungsrohr 31 eingreift und letzteres axial führt. Am oberen Ende der Bohrung 29 im Bearbeitungswerkzeug 11 sind gegen das Führungsrohr 31 gerichtete umlaufende Rippen 39 angeformt und bilden einen Dichtungslabyrinth (vgl. auch vergrösserte Darstellung des Bereichs A in Figur 4).

Auf dem dem Deckel 5 abgewendeten Ende des Führungsrohrs 31 sitzt eine Haube 41 mit einer beispielsweise konisch verlaufenden Spitze 43. Die Haube 41 ist im Bereich der Spitze 43 (dem höchstliegenden Bereich) derart gestaltet, dass sie von der Spitze einer Pipette 45 durchstossen werden kann. Die Spitze 43 kann entweder Sollbruchbereiche aufweisen oder aus einem elastischen, von der Spitze durchstechbaren Material bestehen. Selbstverständlich kann der durchstechbare Bereich aus dem gleichen Material bestehen wie das Führungsrohr 31 und mit diesem im Einkomponenten- oder Zweikomponenten-Verfahren hergestellt worden sein. Die Haube 43 liegt vorzugsweise, wie in Figur 2 ersichtlich, in einer zur Symmetrieachse des Führungsrohrs 31 geneigten Ebene E. Die geneigte Ebene E bewirkt, dass Stoffe, welche während der Bearbeitung auf letztere zu liegen kommen, von selbst wieder von dieser heruntergleiten und zurück zu den Zähnen 13 geführt werden.

Auf der Peripherie des Rührelementes 33 ist ein schraubenlinienförmig verlaufendes Fördermittel 47 aus Kunststoff oder Metall angeordnet. Die innere Kante 51 des Fördermittels 47 verläuft in der Mantelfläche eines fiktiven Kegelstumpfs, gebildet durch die Kanten der Zähne 13. Die äussere Kante 49 liegt über einen Teilbereich am Mantel 1 des Führungsrohrs 31 an. Im Bereich des Bearbeitungswerkzeugs 11 führt daher die innere Kante 51 schleifend und schneidend an den Kronen der Zähne 13 vorbei. Das Fördermittel 47 überstreicht folglich, wenn das Rührelement 33 im Bearbeitungswerkzeug 11 gedreht wird, den Raum zwischen dem Mantel 1 des Labortestgefässes 3 und dem Bearbeitungswerkzeug 11 bzw. dem über dieser liegenden Schneidflosse 15. Vorzugsweise sind im Fördermittel 47 Schlitze 53 eingelassen, welche den Durchtritt von Flüssigkeit von oben nach unten ermöglichen können und mit den Schneidflossen 15 zur Grobfragmentierung der Probe dienen.

Der Drehantrieb des Führungsrohrs 31 bzw. des Rührelements 33 mit dem Fördermittel 47 erfolgt durch einen externen, nicht dargestellten Antriebsmotor, dessen Abtriebswelle durch den Deckel 5 ins Innere des Führungsrohrs 31 eingreift. Eine formschlüssige Mitnahme des Führungsrohrs 31 ist durch in dessen Bohrung angebrachte Einschnitte 55 oder durch eine Feinzahnung gewährleistet.

Für den Transport des Labortestgefässes 3 insbesondere nach der Probeentnahme ins Labor und/oder für die weitere Lagerung kann auf dem deckelseitigen Ende des Führungsrohrs 31 ein Zapfen 57 aufgesetzt sein.

In der in den Figuren 1 - 7 dargestellten Ausgestaltung der Erfindung ist am bodenseitigen Ende des Labortestgefässes 3 ein Sieb 59 eingesetzt und wird von geeigneten Mitteln 61 in der gewünschten axialen Lage festgehalten. Die Peripherie des Siebes 59 liegt dichtend an der Innenwand des Mantels 1 an. Das Sieb 59, wie es auch in Figur 3 vergrössert dargestellt ist, kann eine gelochte Platte sein oder es kann aus einem oder mehreren übereinander liegenden Draht- oder Kunststoffgittern bestehen. Innerhalb der Siebfläche ist ein rohr- oder domförmiger Aufsatz 63 ausgebildet, welcher das Sieb 59 deckelseitig überragt. Am Aufsatz 63 ist über dessen untenliegenden Öffnungsquerschnitt eine durchstossbare Fläche 65 ausgebildet. Vorzugsweise ist diese Fläche 65 in Richtung auf das Sieb 59 zu konisch verlaufend gestaltet und derart ausgebildet, dass sie durch die Spitze einer Pipette 45 leicht durchstossbar ist. Zu diesem Zweck können in der Fläche 65 Sollbruchbereiche oder -linien 66 ausgebildet sein, oder die Fläche 65 besteht aus einer elastischen, leicht durchstechbaren Membran. Die konisch verlaufende Fläche 65 liegt koaxial und leicht beabstandet zur Spitze 43 am Rührelement 33.

Um die Wirksamkeit des Fördermittels 47 zu erhöhen, ist im ersten Ausführungsbeispiel gemäss Figur 1 der Mantel 1 über einen Winkelbereich von beispielsweise 120° verengt, wobei das obere Ende des verengten Abschnitts 67 eine Sehne 69 im Mantel 1 bilden kann. Der Querschnitt des Mantels 1 oberhalb der Sehne 69 ist folglich der eines Kreisabschnittes (vergl. Fig. 3).

Der Boden 9 des Labortestgefässes 3 kann eben oder bombiert sein oder, wie in Figur 1 dargestellt, einen Sumpf 71 aufweisen. Das bodenseitige Ende des Labortestgehäuses 3 kann auch einen Stehkragen 75 als Standfläche aufweisen.

Nachfolgend wird die Funktionsweise der Vorrichtung erläutert.

Das in Figur 1 dargestellte fertig konfektionierte Labortestgefäss 3 wird durch Abnehmen des Deckels 5 geöffnet und es kann dann von oben durch die Öffnung 7 der zu bearbeitende Stoff ins Innere eingeführt werden. Das wieder verschlossene Labortestgefäss 3 wird mit dessen Inhalt ins Labor gebracht. Nun kann das Labortestgefäss 3 in die in Figur 1 dargestellte Lage (Deckel 5 unten) gebracht und auf die Abtriebswelle eines motorischen Antriebs (nicht dargestellt) aufgesetzt werden. In Abhängigkeit der Drehgeschwindigkeit der Abtriebswelle und der Bearbeitungszeit wird im Labortestgefäss 3 enthaltener Teststoff nun vom Fördermittel 47 über die Zähne 13 geführt. Das Fördermittel 47 bewirkt aber zudem, dass der bearbeitete Stoff dauernd in axialer Richtung innerhalb des Labortestgefässes 3 von unten nach oben bzw. von oben nach unten zu den Zähnen 13 geführt wird. Sobald nun die gewünschte Fragmentierung oder Homogenisierung erreicht ist, nimmt die Bedienungsperson das Labortestgefäss 3 vom Antrieb ab, dreht es um, so dass der Deckel 5 oben ist.

Der bearbeitete Stoff kann nun durch das Sieb 59 hindurch in einen Sammelraum 73 fliessen. Grobe Anteile werden oberhalb des Siebes 59 zurückgehalten.

Nun kann durch das hohle Führungsrohr 31 die Pipette 45 durch die Haube 41 und von dort, geführt durch die konische Fläche 65, in den Aufsatz 63 gestossen werden. Die Spitze der Pipette 45 befindet sich nun im Sammelraum 73 zwischen der Unterseite des Siebes 59 und dem Boden 9 des Labortestgefässes 3. Das gewünschte Endprodukt aus der Bearbeitung ist im Raum 73 folglich frei von Teilen, welche die Einsaugöffnung der Pipette 45 verstopfen könnten. Nach der Probeentnahme kann ein Zapfen 57 für die Lagerung des Resthomogenats wieder aufgesetzt und so einen dauerhaften, hermetisch dichten Verschluss bilden.

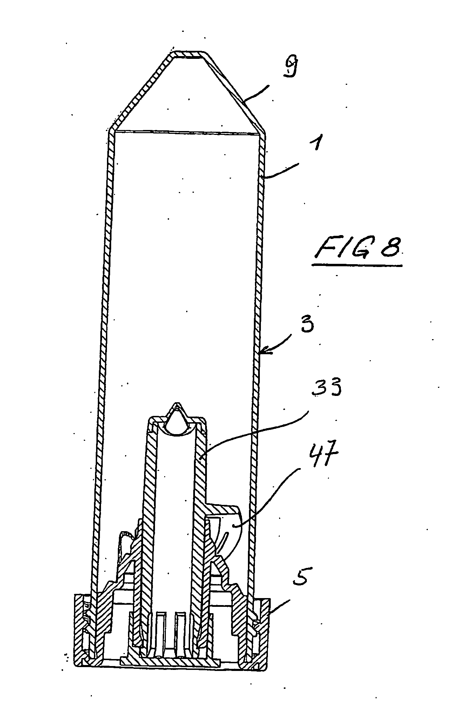

In der einfacheren Ausgestaltung der Erfindung gemäss Figur 8 ist das erfindungsgemässe Rührelement 33 und das Bearbeitungswerkzeug 11 in einem zylindrischen Labortestgefäss 3 eingesetzt. Die Durchmischung des sich in Bearbeitung befindlichen Stoffes erfolgt wiederum durch das Fördermittel 47, ohne dass jedoch besondere Massnahmen getroffen worden sind, um ein unerwünschtes Vor-sichherschieben der Probe zu vermeiden und eine Umwälzung des verflüssigten Stoffes zu begünstigen. Auch fehlt in dieser Ausgestaltung der Erfindung ein Sieb, welches nicht pipettierbare Partikel aus der bearbeiteten Stoffmasse zurückhält. Diese Ausführung der Erfindung eignet sich für Stoffe, welche wenig oder keine nicht fragmentierbare Anteile enthalten.

Die Vorrichtungen sind zum Einmalgebrauch konzipiert und vorzugsweise vollständig aus Kunststoff gefertigt.

## Patentansprüche

1. Vorrichtung zum Extrahieren, Fragmentieren, Mischen und Homogenisieren von insbesondere infektiösen, übel riechenden, chemisch aggressiven oder sterilen Stoffen in einem rohrförmigen Labortestgefäss (3) mit einem offenen ersten Ende zum Aufsetzen eines Verschlussdeckels (5) und mit einem durch einen Boden (9) geschlossenen zweiten Ende, umfassend ein im Verschlussdeckel (5) des Labortestgefässes (3) angeordnetes Bearbeitungswerkzeug (11), welches temporär an einen Antriebsmotor ankuppelbar ist, wobei das Bearbeitungswerkzeug (11) ein Rührelement (33) mit einer hohlen Welle (31) umfasst, deren bodenseitiges Ende durch eine von einer Pipettenspitze durchstossbare Haube (41) verschlossen ist, **dadurch gekennzeichnet, dass** an der hohlen Welle (31) ein schraubenlinienförmig verlaufendes Fördermittel (47) angeordnet ist.

2. Vorrichtung nach Anspruch 1, **dadurch gekennzeichnet, dass** der Durchmesser des Fördermittels (47) in Richtung zum Boden (9) hin abnimmt.

3. Vorrichtung nach Anspruch 1 oder 2, **dadurch gekennzeichnet, dass** im Zentrum der Haube (41) eine konisch verlaufende Spitze (43) ausgebildet ist.

4. Vorrichtung nach einem der Ansprüche 1 bis 3, **dadurch gekennzeichnet, dass** beabstandet zum Boden (9) ein Sieb (59) in den rohrförmigen zentralen Teil des Labortestgefässes (3) eingesetzt ist, das den bodenseitigen Raum (73) vom deckelseitigen Raum trennt.

5. Vorrichtung nach Anspruch 4, **dadurch gekennzeichnet, dass** im Sieb (59) eine durch eine Pipettenspitze leicht durchstoss- oder durchbrechbare Fläche (65) ausgebildet ist.

6. Vorrichtung nach Anspruch 5, **dadurch gekennzeichnet, dass** die konisch verlaufende Spitze (43) der Haube (41) koaxial zur durchstossbaren Fläche (65) im Sieb (59) liegt.

7. Vorrichtung nach Anspruch 6, **dadurch gekennzeichnet, dass** die durchstossbare Fläche (65) im Sieb (59) beabstandet zur Sieboberfläche an einem rohr- oder domförmigen, zur Öffnung (7) hin ragenden Aufsatz (63) angeordnet ist.

8. Vorrichtung nach einem der Ansprüche 5 bis 7, **dadurch gekennzeichnet, dass** die durchstossbare Fläche (65) eben oder in Richtung zum Boden (9) hin konisch verlaufend ausgebildet ist.

9. Vorrichtung nach einem der Ansprüche 5 bis 8, **dadurch gekennzeichnet, dass** in der durchstossbaren Fläche (65) Sollbruchbereiche oder -linien (66) oder eine elastische Membran angeordnet sind.

10. Vorrichtung nach einem der Ansprüche 2 bis 9, **dadurch gekennzeichnet, dass** die Basis der Spitze (43) am Führungsrohr (31) auf einer zur Symmetrieachse (A) der Welle (31) geneigt liegenden Deckelfläche angeordnet ist.

11. Vorrichtung nach einem der Ansprüche 1 bis 10, **dadurch gekennzeichnet, dass** der Mantel (1) des Labortestgefässes (3) über einen Bogen von 150-180° im wesentlichen konisch verengend verlaufend ausgebildet ist und die periphere Kante (49) des Fördermittels (47) am konischen Bereich des Mantels (1) vorbeiführbar ausgebildet ist.

## Claims

1. A device for extracting, fragmenting, mixing and homogenising, in particular, infectious, malodourous chemically aggressive or sterile substances in a tubular laboratory test vessel (3) comprising an open first end for placement of a sealing cover (5) and comprising a second end, closed by a base (9), comprising a processing tool (11) which is arranged in the sealing cover (5) of the laboratory test vessel (3) and can be coupled temporarily to a drive motor, the processing tool (11) comprising a stirrer (33) having a hollow shaft (31), of which the base-side end is sealed by a cap (41) which can be pierced by the tip of a pipette, **characterised in that** a spirally extending feed means (47) is arranged on the hollow shaft (31).

2. The device according to claim 1, **characterised in that** the diameter of the feed means (47) decreases towards the base (9).

3. The device according to either claim 1 or claim 2, **characterised in that** a conically extending tip (43) is formed in the centre of the cap (41).

4. The device according to any one of claims 1 to 3, **characterised in that** a screen (59) is inserted, at a distance from the base (9), into the tubular central part of the laboratory test vessel (3) and separates the base-side compartment (73) from the cover-side compartment.

5. The device according to claim 4, **characterised in that** an area (65) which is easily pierceable or penetrable by the tip of a pipette is formed in the screen (59).

6. The device according to claim 5, **characterised in that** the conically extending tip (43) of the cap (41) is located coaxially with the pierceable area (65) in the screen (59).

7. The device according to claim 6, **characterised in that** the pierceable area (65) in the screen (59) is arranged, at a distance from the screen surface, on a tubular or dome-shaped attachment (63) projecting towards the opening (7).

8. The device according to any one of claims 5 to 7, **characterised in that** the pierceable area (65) extends in a planar manner or conically towards the base (9).

9. The device according to any one of claims 5 to 8, **characterised in that** predetermined breaking regions or lines (66) or a resilient membrane is/are arranged in the pierceable area (65).

10. The device according to any one of claims 2 to 9, **characterised in that** the base of the tip (43) is arranged on the guide tube (31) on a cover face inclined to the axis of symmetry (A) of the shaft (31).

11. The device according to any one of claims 1 to 10, **characterised in that** the casing (1) of the laboratory test vessel (3) extends in a substantially conically narrowing manner over an arc of 150-180° and the peripheral edge (49) of the feed means (47) can pass by the conical region of the casing (1).

## Revendications

1. Dispositif destiné à l'extraction, à la fragmentation, au mélange et à l'homogénéisation de matières qui sont notamment infectieuses, malodorantes, chimiquement agressives ou stériles, au sein du récipient à essai de laboratoire (3) de forme tubulaire pourvu d'une première extrémité ouverte pouvant recevoir un couvercle de fermeture (5) et d'une deuxième extrémité fermée par un fond (9), comprenant un outil de traitement (11) logé dans le couvercle de fermeture (5) du récipient à essai de laboratoire (3) et pouvant temporairement être couplé à un moteur d'entraînement, l'outil de traitement (11) comprenant un élément d'agitation (33) muni d'un arbre creux (31) dont l'extrémité orientée vers le fond est fermée par un capuchon (41) pouvant être percé par la pointe d'une pipette, **caractérisé en ce qu'**un moyen de transport (47) sous forme d'une ligne hélicoïdale est disposé sur l'arbre creux (31).

2. Dispositif selon la revendication 1, **caractérisé en ce que** le diamètre du moyen de transport (47) s'amenuise en direction du fond (9).

3. Dispositif selon les revendications 1 ou 2, **caractérisé en ce qu'**une pointe (43) de forme conique est prévue au centre du capuchon (41).

4. Dispositif selon l'une des revendications 1 à 3, **caractérisé en ce qu'**à distance du fond (9), un tamis (59) est placé dans la partie centrale tubulaire du récipient à essai de laboratoire (3), séparant ainsi l'espace situé sur le côté fond (73) de l'espace situé sur le côté couvercle.

5. Dispositif selon la revendication 4, **caractérisé en ce qu'**une surface (65) pouvant être percée ou rompue facilement par une pointe de pipette, est aménagée au sein du tamis (59).

6. Dispositif selon la revendication 5, **caractérisé en ce que** la pointe (43) de forme conique du capuchon (41) se trouve dans une position coaxiale par rapport à la surface (65) facile à percer au sein du tamis (59).

7. Dispositif selon la revendication 6, **caractérisé en ce qu'**au sein du tamis (59), la surface (65) pouvant être percée est disposée à distance de la surface dudit tamis, sur un embout (63) en forme de tube ou de dôme qui est orienté vers l'ouverture (7).

8. Dispositif selon l'une des revendications 5 à 7, **caractérisé en ce que** la surface (65) pouvant être percée est réalisée sous une forme plane ou sous une forme conique pointant vers le fond (9).

9. Dispositif selon l'une des revendications 5 à 8, **caractérisé en ce que** des zones ou des lignes constituant des amorces de rupture (66) ou bien une membrane élastique est/sont disposée(s) au sein de la surface pouvant être percée (65).

10. Dispositif selon l'une des revendications 2 à 9, **caractérisé en ce que**, sur le tube de guidage (31), la base de la pointe (43) est disposée sur une surface de couvercle qui est inclinée par rapport à l'axe de symétrie (A) de l'arbre (31).

11. Dispositif selon l'une des revendications 1 à 10, **caractérisé en ce que** l'enveloppe (1) du récipient à essai de laboratoire (3) est réalisée, sur un arc de cercle compris entre 150 et 180°, sous une forme qui s'amenuise essentiellement de façon conique, et que le bord périphérique (49) du moyen de transport (47) est réalisé de façon à ce qu'il peut être avancé le long de la zone conique de l'enveloppe (1) sans y pénétrer.
